# EUROPEAN PATENT SPECIFICATION

(11) **EP 4 420 961 B1**
(45) Date of publication and mention of the grant of the patent: **29.07.2026**
(21) Application number: 23157989.7
(22) Date of filing: 22.02.2023
(51) Int. Cl.: B62D 25/18

(54) **MUDFLAP WITH HYDROPHOBIC PROPERTIES**
SCHMUTZFÄNGER MIT HYDROPHOBEN EIGENSCHAFTEN
BAVETTE DE GARDE-BOUE AYANT DES PROPRIÉTÉS HYDROPHOBES

(43) Date of publication of application: 28.08.2024
(73) Proprietor: VOLVO TRUCK CORPORATION, 405 08 Göteborg (SE)
(72) Inventor: CHANDRAPPA, Manjunath, 563125 Chintamani Karnataka (IN)
(74) Representative: Ström & Gulliksson AB

(56) References cited:
- EP-A1- 4 071 032
- US-B1- 9 221 390

## Description

### TECHNICAL FIELD

The disclosure relates generally to a mudflap for a vehicle. In particular aspects, the disclosure relates to a mudflap having hydrophobic properties. The disclosure can be applied in all types of vehicles, including heavy-duty vehicles, such as trucks, buses, and construction equipment. Although the disclosure may be described with respect to a particular vehicle, the disclosure is not restricted to any particular vehicle.

### BACKGROUND

Mudflaps are commonly used to prevent a mixture of dirt, dust and water from the roadway to be sprayed from the tires to the rear of a vehicle such as a car or a truck. Such a mudflap is known from EP 4 071 032 Al according to the preamble of claim 1. Existing antispray mudflaps are usually quite effective in meeting the soiling requirement and other regulation requirements, however, the air recirculated due to the tire movement is trapped between the tire and flap causing a drag which impacts the aerodynamic performance of vehicle. There is thus a need for an improved antispray mudflap.

### SUMMARY

According to the invention, there is provided a mudflap adapted for a vehicle, having an outer frontward facing side, and outer backward facing side, and wherein said mudflap has a bottom section comprising multiple perforations, configured to allow air to pass through said bottom section from said frontward facing side to said backward facing side, and wherein said bottom section comprises at least one hydrophobic material. The invention is according to claim 1. The invention seeks to provide a mudflap that reduces drag of a vehicle. A technical benefit may include a reduced energy and/or fuel consumption of the vehicle.

In the invention, the hydrophobic material may be provided as a coating on at least the frontward facing side of said bottom section. A technical benefit includes that the coating deflects dirt and water from the mudflap.

In some examples outside the subject-matter of the claims, the bottom section may further, or instead, comprise a membrane having multiple laminated layers, and wherein said membrane comprises said multiple perforations.

In some examples outside the subject-matter of the claims, said membrane may comprise a stack of laminated layers, and wherein said stack may comprise layers formed from a hydrophobic material.

In some examples, outside the subject-matter of the claims, each layer of said membrane comprises multiple perforations.

In some examples outside the subject-matter of the claims, each layer of said membrane comprises a mesh structure with perforations.

In some examples, said perforations or mesh structure may be defined by an open cross-sectional area which is equal to or less than a predefined area.

In some examples, said predefined area may be based on at least one of the hydrophobic properties of the hydrophobic material, and the viscosity of water. The technical benefit may include that the membrane will thus not allow water to pass through, while air passes the membrane and hence reduces drag of the vehicle.

In some examples, the hydrophobic material may be formed from polytetrafluoreten.

In some examples, the hydrophobic material may be formed from polyurethane.

In some examples, the hydrophobic material may be formed from polyethylene.

In some examples, the hydrophobic material is formed from any one of polytetrefluoreten, polyurethane and polyethylene or a combination thereof.

In some examples, said perforations or said mesh structure have a cross-section which may be any one of a circle, triangle, rectangle, hexagon, pentagon, heptagon and an octagon or a combination thereof.

In some examples, the perforations form through-holes.

In some examples, at least a wall of each through-hole comprises said hydrophobic material. The technical benefit may include that water and dirt more easily can pass through the through-hole, thus reducing the risk of the trough-hole being clogged.

According to a second aspect of the disclosure, there is provided a fender adapted for a vehicle comprising the mudflap according to the first aspect. The second aspect of the disclosure may seek to a fender having reduced drag, and hence reduced fuel and/or energy consumption of the vehicle. Further to this,

In some examples, said mudflap or at least a bottom section of said mudflap extends below said fender.

In some examples, said mudflap may be releasably attached to said fender. This may allow for the technical benefit that the mudflap may be retro-fitted or replaced easily of the mudflap is releasably attached to the fender.

According to a third aspect, there is provided a vehicle comprising the mudflap according to the first aspect, or the fender according to the second aspect. The technical benefit may include that the vehicle experiences less drag, and thus may have a reduced energy and/or fuel consumption.

According to a fourth aspect, there is provided the use of a mudflap according to the first aspect, or a fender according to the second aspect, in a vehicle.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is an exemplary mudflap according to one example.
**FIG. 2** is an exemplary mudflap in an exploded view according to one example.

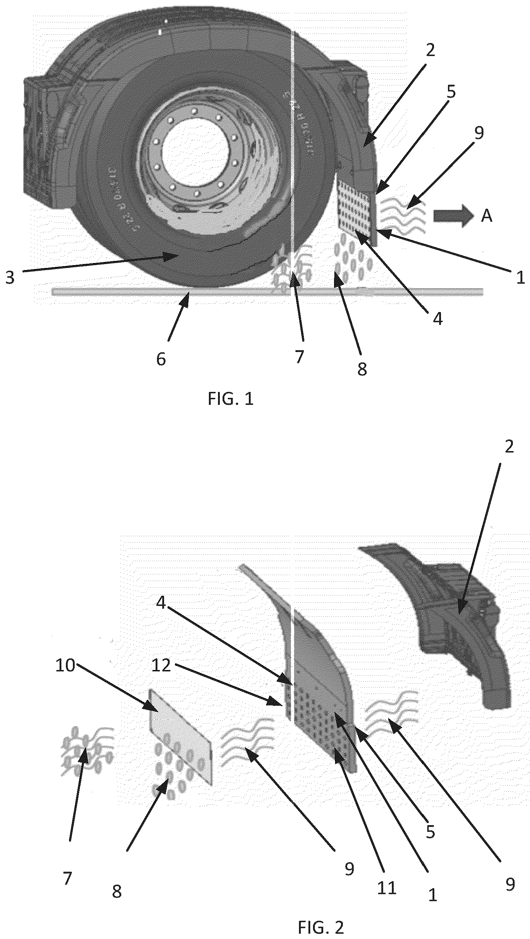

**FIG. 2** is an exemplary mudflap in an exploded view according to another example.

### DETAILED DESCRIPTION

Aspects set forth below represent the necessary information to enable those skilled in the art to practice the disclosure.

With existing antispray mudflaps air which is recirculated between due to the tire movement is trapped between the tire and flap causing a drag which impacts the aerodynamic performance of a vehicle. The inventive mudflap for a vehicle, which is coated or at least partly made out of a hydrophobic material may reduce mud or dirt sticking to the mudflap, and allow for air to pass through perforations in the mudflap. This will reduce drag of the vehicle and in turn reduce energy/fuel consumption. The combination of having a mudflap with perforations and it being coated or at least partly made of a hydrophobic material will reduce risk of dirt and/or mud to clog the perforations.

**FIG. 1** is an exemplary mudflap 1 arranged on a fender 2 of a vehicle according to one example. The fender 2 is arranged behind a wheel 3. The mudflap has an outer frontward facing side 4, and an outer backward facing side 5. The frontward facing side 4 is thus facing the wheel 3. When the wheel 3 contacts a road surface 6 mud 7, i.e. particles mixed with water and air, that splashes from the road surface 6 and hits the frontward facing side 4 of the mudflap. According to the inventive concept the mudflap allows for air (A) 9 to pass through the mudflap 1, through perforations or through-holes arranged in at least a portion or section of the mudflap, and deflects water and particles 8 back onto the road surface. The mudflap 1 or at least a bottom portion or section 12 of the mudflap 1 may extend below said fender 2. The mudflap 1 may be releasably attached to the fender 2. This may allow for the mudflap to be removed and exchanged for a new mudflap if it has for instance been worn out or damaged.

**FIG. 2** is an exemplary mudflap 1 in an exploded view. The mudflap 1 or a bottom section 12 thereof, may be provided with a coating layer 10 on the frontward facing side 4. This exemplary mudflap 1 is also illustrated in the previous FIG. 1. The coating layer 10 may be made from a hydrophobic material. The hydrophobic material may at least partially deflect water and dirt (slug and soil) that hits the frontward facing surface of the mudflap. The hydrophobic material thus deflects water and particles 8. The mudflap 1 may further comprise a body or slab of a rigid or flexible material. The mudflap 1, or the mudflap slab, may further be provided with perforations or through-holes 11 that allow for air 9 to pass through. These perforations or openings 11 form pores or through-holes, which extends from the frontward facing side 4 to the backward facing side 5. The mudflap according to this example may be formed by providing a mudflap, such as for instance a slab a rigid or flexible material, e.g. rubber, with perforations or through-holes, and then apply a hydrophobic material as a coating on the frontward facing side. According to one example, at least a part of the walls of the trough-holes may further comprise a hydrophobic material, or be provided with a hydrophobic material

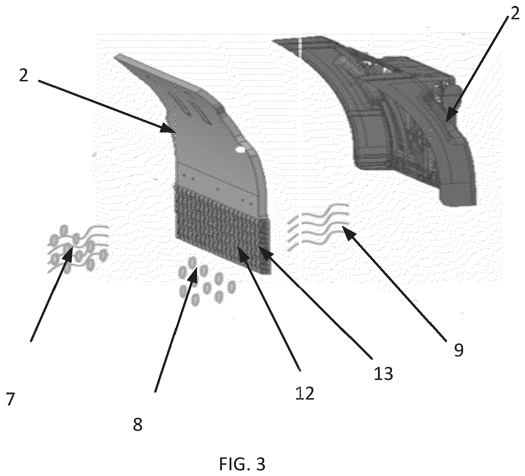

**FIG. 3** is a mudflap 1 according to an alternative example outside the subject-matter of the claims. According to the inventive concept the mudflap 1 allows for air 9 from the mud 7 to pass through the mudflap 1 or the bottom section 12, while particles and water 8 is deflected from the mudflap. In the alternative example the mudflap 1 or the bottom section 12 comprises a membrane 13. The membrane 13 may comprise multiple layers of material. The membrane 13 or at least part of the layers may comprise a hydrophobic material. The number of membrane layers will be equivalent to the desired thickness of the mudflap. According to one example, the layers of the membrane 13 are not fully laminated or fused together, but joined at specific designated locations along the length on the edges.

In one example, outside the subject-matter of the claims, a frame or a frame structure may be used to hold the layers of the membrane together. One advantage may be that the frame allows for a small distance or gap to be formed between the individual layers of the membrane, where water, slug and silt may be deflected towards the ground, while air is allowed to pass through the membrane from the frontward facing side 4 to the backward facing side 5. Additionally or alternatively the membrane may comprise channels for guidance of slug/silt/water downwards. The channels may be formed in or between the layers.

According to one example, outside the subject-matter of the claims, the membrane 13 comprises a combination of non-hydrophobic and hydrophobic layers.

In one example, outside the subject-matter of the claims, at least one liquid molecular separation membrane layer can be positioned in between at least one hydrophobic membrane layer on either side.

The hydrophobic material of the mudflap 1, the coating layer 10 may comprise any one of polytetrafluoreten, polyurethane and polyethylene or a combination thereof.

The perforations 11 may form through-holes, extending from the frontward facing Side 4 to the backward facing side 5.

According to one example at least a portion of the wall of each through-hole comprises a hydrophobic material. According to one alternative said hydrophobic material may be coated onto said wall when the frontward facing side is coated with said hydrophobic material. According to another alternative outside the subject-matter of the claims the walls of the trough-holes may be formed from the mesh structure of the membrane layers, and therefore the walls may comprise the hydrophobic material of the membrane layers.

The through-holes or perforations may further have any shape, such as circular-like holes or a mesh structure of any geometrical shape or cross-section such as triangle, rectangle, hexagon, pentagon, heptagon and an octagon or a combination thereof.

According to one example, as illustrated in FIG. 1 through-holes, or perforations, may have a size, or diameter, in the range of 28 to 50 mm, and be distributed across the mudflap area. The perforations may have a straight open area or an open cross-sectional area which is less than a predetermined area. The predetermined area may be based on water viscosity, the hydrophobic properties of the hydrophobic material. The hole size, or diameter, can also be determined or influenced by the truck road conditions and the velocity. The hole size will be selected based on the above-mentioned parameters, and be based on for instance aerodynamic simulations and calculations for a specific truck or tire. The straight open area or an open cross-sectional area of the perforations, i.e. the pores or through-holes, will preferably be smaller than the diameter of the slug or soil mixture, i.e. the water and mud mixture from the tires that is getting sprayed on the frontward facing side 4 of the mudflap. Due to the outwards facing layer of hydrophobic material on the mudflap larger openings can be provided in the mudflap, which improves aerodynamics by allowing more air to pass through. The hydrophobic material thus allows for the air to pass through, but prevents or reduces the amount of slug and silt that can pass through the mudflap, and thus reduces the risk of the mudflap to become clogged. This effect is achieved due to the water repelling effect of the hydrophobic material. This affects also the surface tension of the slug and silt typically containing water, by creating larger droplets which, and by this reducing the risk of slug and silt to enter the perforations. Larger and heavier droplets of slug and silt are further more prone to run downwards towards the ground, due to gravitational forces.

The membrane 13 or membrane layers may in one example, outside the subject-matter of the claims, comprise a mesh structure with perforations. The perforations the membrane or the membrane layers, or the mesh structure, may have straight open area or an open cross-sectional area which is less than a predetermined area. The predetermined area may be based on water viscosity, the hydrophobic properties of the hydrophobic material and, optionally, the number of layers in the membrane. The size of the perforations or through-holes extending through the membrane or mudflap will be determined based on aerodynamic calculations. In one example, such calculations could be based on studies of the pressure difference across in various trucks near the tire area. The straight open area or an open cross-sectional area of the perforations, i.e. the pores or through-holes, will preferably be smaller than the diameter of the slug or soil mixture, i.e. the water and mud mixture from the tires that is getting sprayed on the frontward facing side of the mudflap or membrane 13. The membrane 13 may comprise layers of a mesh structure comprising multiple hydrophobic layers within the mesh structure, which may be held together by a frame structure. The hydrophobic layers repel the water and allows the air through the membrane by allowing the slug silt to drop to the ground at the hydrophobic layers. Air continuously passes through the membrane through pores or perforations of the mesh structure. The slug will be prevented from passing through the membrane, or the holes of the mudflap slab, and drops down to ground allowing the air to pass through. This hence may reduce drag of the vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is about the aspects described above and illustrated in the drawings; rather, the skilled person will recognize that many changes and modifications may be made within the present disclosure. In the drawings and specification, there have been disclosed aspects for purposes of illustration only and not for purposes of limitation, the scope of the invention is defined by the following claims.

## Claims

1. A mudflap (1) adapted for a vehicle, having an outer frontward facing side (4), and outer backward facing side (5), and wherein said mudflap (1) has a bottom section (12) comprising multiple perforations (11), configured to allow air (9) to pass through said bottom section (12) from said frontward facing side (4) to said backward facing side (5), **characterized in that**
said mudflap comprises a slab of rubber, with perforations or through-holes, and wherein said bottom section (12) comprises at least one hydrophobic material, and **in that** said hydrophobic material is provided as a coating (10) on at least the frontward facing side (4) of said bottom section (12).,

2. The mudflap (1) according to claim 1, wherein said perforations is defined by an open cross-sectional area which is equal to or less than a predefined area, and wherein said predefined area is based on at least one of the hydrophobic properties of the hydrophobic material, and the viscosity of water.

3. The mudflap (1) according to any one of claims 1 to 2, wherein said hydrophobic material is formed from any one of polytetrefluoreten, polyurethane and polyethylene, or a combination thereof.

4. The mudflap (1) according to any one of claims 1 to 3, wherein said perforations or said mesh structure have a cross-section being any one of a circle, triangle, rectangle, hexagon, pentagon, heptagon and an octagon or a combination thereof.

5. The mudflap (1) according to any one of claims 1 to 4, wherein said perforations form through-holes.

6. The mudflap (1) according to claim 5, wherein at least a wall of each through-hole comprise said hydrophobic material.

7. A fender (2) adapted for a vehicle comprising the mudflap (1) according to any one of claims 1 to 6.

8. The fender (2) according to claim 7, wherein said mudflap (1) or at least a bottom section (12) of said mudflap (1) extends below said fender (2).

9. The fender (2) according to any one of claims 7 or 8, wherein said mudflap (1) is releasably attached to said fender.

10. A vehicle comprising the mudflap (1) according to any one of claims 1 to 6, or the fender (2) according to any one of claims 7 to 9.

11. Use of a mudflap (1) according to any one of claim 1 to 6, or a fender (2) according to any one of claims 7 to 9, in a vehicle.

## Patentansprüche

1. Ein Spritzlappen (1), der für ein Fahrzeug angepasst ist, aufweisend eine äußere nach vorne gerichtete Seite (4), und äußere nach hinten gerichtete Seite (5), und wobei der Spritzlappen (1) einen unteren Abschnitt (12) aufweist, umfassend mehrere Perforationen (11), die konfiguriert sind, um Luft (9) zu ermöglichen, durch den unteren Abschnitt (12) von der nach vorne gerichteten Seite (4) zu der nach hinten gerichteten Seite (5) hindurchzutreten, **dadurch gekennzeichnet, dass** der Spritzlappen eine Gummiplatte umfasst, mit Perforationen oder Durchgangslöchern, und wobei der untere Abschnitt (12) mindestens ein hydrophobes Material umfasst, und dadurch, dass das hydrophobe Material als eine Beschichtung (10) auf mindestens der nach vorne gerichteten Seite (4) des unteren Abschnitts (12) bereitgestellt ist.,

2. Der Spritzlappen (1) nach Anspruch 1, wobei die Perforationen durch eine offene Querschnittsfläche definiert ist, die gleich einer oder kleiner als eine vordefinierte Fläche ist, und wobei die vordefinierte Fläche auf mindestens einer der hydrophoben Eigenschaften des hydrophoben Materials, und der Viskosität von Wasser basiert ist.

3. Der Spritzlappen (1) nach einem der Ansprüche 1 bis 2, wobei das hydrophobe Material aus einem beliebigen von Polytetrefluoreten, Polyurethan und Polyethylen, oder einer Kombination davon gebildet ist.

4. Der Spritzlappen (1) nach einem der Ansprüche 1 bis 3, wobei die Perforationen oder die Netzstruktur einen Querschnitt aufweisen, der ein beliebiger von einem Kreis, Dreieck, Rechteck, Hexagon, Pentagon, Heptagon und einem Oktagon oder einer Kombination daraus ausgewählt ist.

5. Der Spritzlappen (1) nach einem der Ansprüche 1 bis 4, wobei die Perforationen Durchgangslöcher bilden.

6. Der Spritzlappen (1) nach Anspruch 5, wobei mindestens eine Wand jedes Durchgangslochs das hydrophobe Material umfasst.

7. Ein Kotflügel (2), der für ein Fahrzeug angepasst ist, umfassend den Spritzlappen (1) nach einem der Ansprüche 1 bis 6.

8. Der Kotflügel (2) nach Anspruch 7, wobei der Spritzlappen (1) oder mindestens ein unterer Abschnitt (12) des Spritzlappen (1) sich unterhalb des Kotflügels (2) erstreckt.

9. Der Kotflügel (2) nach einem der Ansprüche 7 oder 8, wobei der Spritzlappen (1) lösbar an dem Kotflügel befestigt ist.

10. Ein Fahrzeug, umfassend den Spritzlappen (1) nach einem der Ansprüche 1 bis 6, oder den Kotflügel (2) nach einem der Ansprüche 7 bis 9.

11. Verwendung eines Spritzlappens (1) nach einem der Anspruch 1 bis 6, oder eines Kotflügels (2) nach einem der Ansprüche 7 bis 9, in einem Fahrzeug.

## Revendications

1. Une bavette garde-boue (1) adaptée pour un véhicule, ayant un côté extérieur orienté vers l'avant (4), et un côté extérieur orienté vers l'arrière (5), et dans laquelle ladite bavette garde-boue (1) a une section inférieure (12) comprenant de multiples perforations (11), configurées pour permettre à de l'air (9) de passer à travers ladite section inférieure (12) depuis ledit côté orienté vers l'avant (4) vers ledit côté orienté vers l'arrière (5), **caractérisée en ce que** ladite bavette garde-boue comprend une plaque de caoutchouc, avec des perforations ou des trous traversants, et dans laquelle ladite section inférieure (12) comprend au moins un matériau hydrophobe, et **en ce que** ledit matériau hydrophobe est fourni sous forme d'un revêtement (10) sur au moins le côté orienté vers l'avant (4) de ladite section inférieure (12).,

2. La bavette garde-boue (1) selon la revendication 1, dans laquelle lesdites perforations est définie par une aire de section transversale ouverte qui est égale ou inférieure à une aire prédéfinie, et dans laquelle ladite aire prédéfinie est basée sur au moins l'une des propriétés hydrophobes du matériau hydrophobe, et la viscosité de l'eau.

3. La bavette garde-boue (1) selon l'une quelconque des revendications 1 à 2, dans laquelle ledit matériau hydrophobe est formé à partir de l'un quelconque parmi polytétréfluoroéthène, polyuréthane et polyéthylène, ou une combinaison de ceux-ci.

4. La bavette garde-boue (1) selon l'une quelconque des revendications 1 à 3, dans laquelle lesdites perforations ou ladite structure maillée ont une section transversale étant l'une quelconque parmi un cercle, un triangle, un rectangle, un hexagone, un pentagone, un heptagone et un octogone ou une combinaison de ceux-ci.

5. La bavette garde-boue (1) selon l'une quelconque des revendications 1 à 4, dans laquelle lesdites perforations forment des trous traversants.

6. La bavette garde-boue (1) selon la revendication 5, dans laquelle au moins une paroi de chaque trou traversant comprend ledit matériau hydrophobe.

7. Une aile (2) adaptée pour un véhicule comprenant la bavette garde-boue (1) selon l'une quelconque des revendications 1 à 6.

8. L'aile (2) selon la revendication 7, dans laquelle ladite bavette garde-boue (1) ou au moins une section inférieure (12) de ladite bavette garde-boue (1) s'étend en-dessous de ladite aile (2).

9. L'aile (2) selon l'une quelconque des revendications 7 ou 8, dans laquelle ladite bavette garde-boue (1) est attachée de manière libérable à ladite aile.

10. Un véhicule comprenant la bavette garde-boue (1) selon l'une quelconque des revendications 1 à 6, ou l'aile (2) selon l'une quelconque des revendications 7 à 9.

11. Utilisation d'une bavette garde-boue (1) selon l'une quelconque de la revendication 1 à 6, ou d'une aile (2) selon l'une quelconque des revendications 7 à 9, dans un véhicule.
